# EUROPEAN PATENT APPLICATION

(11) **EP 4 082 729 A1**
(43) Date of publication of application: **02.11.2022**
(21) Application number: 21192948.4
(22) Date of filing: 25.08.2021
(51) Int. Cl.: B26B 19/06, B26B 19/28

(54) **ELECTRIC HAIR CLIPPER DRIVEN BY A BRUSHLESS EXTERNAL ROTOR MOTOR**

(30) Priority: 27.04.2021 CN 202120882642 U
(71) Applicant: Wuhan Shembao Pet Products Manufacturing Co., Ltd., Wuhan, Hubei Province 430000 (CN)
(72) Inventor: LI, Lei, Jiangxi Province, 33000 (CN)
(74) Representative: Ipside

(57) **Abstract**

The invention discloses an electric hair clipper driven by a brushless external rotor motor, which comprises a cutter assembly 1, a motor assembly 2 and a swing rod transmission assembly 3, wherein the cutter assembly comprises a fixed blade 11 and a moving blade 12 moveably mounted on the fixed blade; the motor assembly comprises a brushless external rotor motor 21, an eccentric output shaft 22 and a spherical bearing 23; the swing rod transmission assembly is installed between the cutter assembly and the motor assembly, and comprises a positioning pin shaft 32 and a transmission swing rod 31 which is sheathed on the positioning pin shaft and rotates around the positioning pin shaft. The end of the transmission swing rod corresponding to the motor assembly forms a drive notch 311 for holding the spherical bearing, and the end of the transmission swing rod corresponding to the cutter assembly is used to drive the moving blade.

## Description

### Technical Field

The invention relates to the technical field of electric hair clippers, in particular to an electric hair clipper driven by a brushless external rotor motor.

### Background of the Invention

Electric hair clipper is well known as a common haircut tool, and is mainly used to trim human or animal hair. The electric hair clipper comprises a shell and a motor arranged in the shell, the front end of the shell is fixedly provided with a fixed blade, the front end of the swing head is fixedly provided with a moving blade through a swing frame, and there is a certain gap between the moving blade and the fixed blade. The motor drives the moving blade to swing back and forth so that the moving blade swings back and forth relative to the fixed blade, to serve the function of hair cutting and trimming.

However, the electric hair clipper in the prior art adopts the traditional motor and transmission structure. The high speed of motor is relied on to drive the cutter to trim hair efficiently, which causes high friction frequency of the blade, resulting in rapid temperature rise and serious heating of the cutter after long-time use. Thus, discomfort and repulsion easily occur when the blade is close to the skin of people or animal of hair cutting, even the risk of scalding. At the same time, the existing conventional electric hair clipper also has the following problems: 1. the wear of the blade is accelerated when it is used at high speed for a long time, resulting in the rapid decrease of blade sharpness; 2. the electric hair clipper works with high noise and fast power consumption; 3. the torque is not large at low speed; and 4. some hair clippers relying on the prior art also adopt variable speed gear transmission. Although large torque can be generated at low speed, the user's experience is poor because the indirect drive of the variable speed gear produces additional noise, and the wear of variable speed gear is also fast.

### Summary of the Invention

In order to overcome the defects in the prior art, the invention provides an electric hair clipper driven by a brushless external rotor motor, which uses the brushless external rotor motor to output power, outputs large torque with small-size motor, and meets the shear force requirements of the shear end at a lower speed setting, so as to directly realize the direct drive of the motor, with high transmission efficiency. At the same time, the size accuracy of the motor assembly and the swing rod transmission assembly is high, which reduces noise, considerably improves the service life of the product, and greatly improves the user experience.

In order to serve the above purpose, the invention provides an electric hair clipper driven by a brushless external rotor motor, which comprises a cutter assembly, a motor assembly and a swing rod transmission assembly.

Wherein the cutter assembly comprises a fixed blade and a moving blade moveably mounted on the fixed blade;

The motor assembly comprises a brushless external rotor motor, an eccentric output shaft driven by the brushless external rotor motor and a spherical bearing sheathed on the eccentric output shaft;

The swing rod transmission assembly is installed between the cutter assembly and the motor assembly, and comprises a positioning pin shaft and a transmission swing rod which is sheathed on the positioning pin shaft and rotates around the positioning pin shaft. The end of the transmission swing rod corresponding to the motor assembly forms a drive notch for holding the spherical bearing, and the end of the transmission swing rod corresponding to the cutter assembly is used to drive the moving blade.

Further, a rotating bearing is arranged at the joint of the positioning pin shaft and the transmission swing rod, the external ring of the rotating bearing is fixedly embedded on the transmission bearing, and the internal ring is fixedly sheathed on the positioning pin shaft.

Further, the invention also comprises a shell and a power supply assembly. The cutter assembly is installed at the front end of the shell, the motor assembly, the swing rod transmission assembly and the power supply assembly are all installed in the shell, and the power supply assembly provides power to the motor assembly.

Wherein, the fixed blade is fixedly installed at the front end of the shell, the brushless external rotor motor is fixedly installed in the shell, and the positioning pin shaft is vertically fixed on one side wall of the shell.

Further, the brushless external rotor motor is horizontally or vertically arranged in the shell.

Compared with the prior art, the invention is simple and reasonable in structure, and adopts the brushless external rotor motor to replace the original conventional brush motor or the brushless internal rotor motor, so as to output the large torque with a smaller-volume motor, and realize direct drive, which greatly reduces the noise during operation. At the same time, the speed output of brushless external rotor motor is more stable, which can obtain better operation effect. Moreover, the spherical bearing is used as the fulcrum between the motor output end and the connection end of swing rod, which minimizes the friction loss of the transmission parts in the transmission process, and thus greatly improves the service life of the product.

### Brief description of the Drawings

Figure 1 is the structural diagram of the electric hair clipper driven by the brushless external rotor motor of the invention;
Figure 2 is a schematic diagram of the separation structure of the cutter assembly, the motor assembly and the swing rod transmission assembly.

The following figures are marked on the drawings:
1. Cutter assembly; 11. Fixed blade; 12. Moving blade; 2. Motor assembly; 21. Brushless external rotor motor; 22. Eccentric output shaft; 23. Spherical bearing; 3. Swing rod transmission assembly; 31. Transmission swing rod; 311. Drive notch; 32. Positioning pin shaft; 33. Rotating bearing; 4. Shell; 5. Power supply assembly.

### Detailed Description of Embodiments

An embodiment of the invention is described in detail below in combination with the figures, but it should be understood that the protection scope of the invention is not limited by the embodiment.

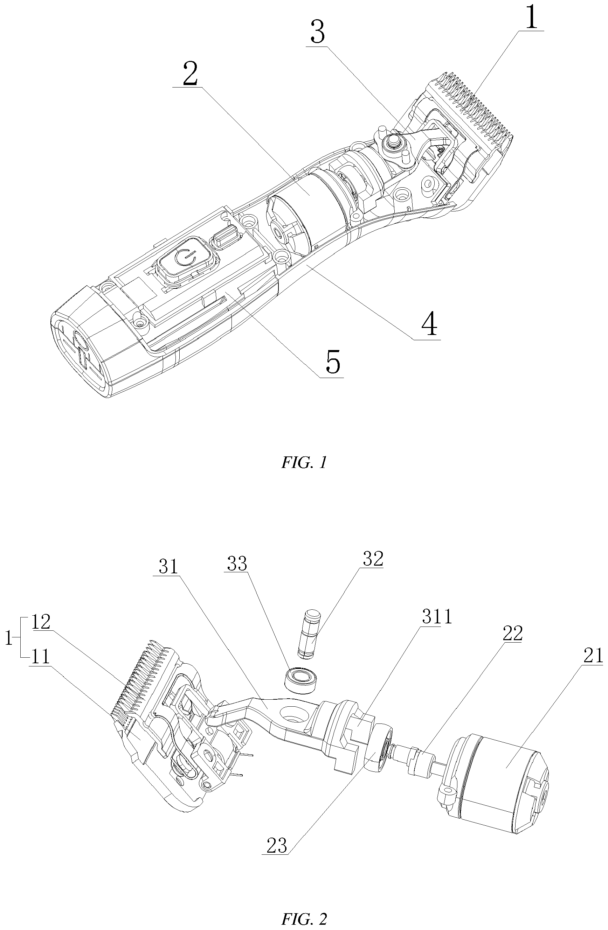

The invention discloses an electric hair clipper driven by a brushless external rotor motor 21, as shown in Figure 1 and Figure 2, which comprises a shell 4, a cutter assembly 1, a motor assembly 2, a swing rod transmission assembly 3 and a power supply assembly 5, wherein the cutter assembly 1 is installed at the front end of the shell 4, and comprises a fixed blade 11 and a moving blade 12. The fixed blade 11 is fixedly connected to the front end of the shell 4, and the moving blade 12 is moveably mounted on the fixed blade 11. The motor assembly 2, the swing rod transmission assembly 3 and the power supply assembly 5 are installed in the shell 4. The power supply assembly 5 provides power for the rotation of the motor assembly 2. Wherein, the motor assembly 2 comprises a brushless external rotor motor 21, an eccentric output shaft 22 driven by the brushless external rotor motor 21, and a spherical bearing 23 sheathed on the eccentric output shaft 22. The brushless external rotor motor 21 is fixedly installed on the shell 4 through a bracket. The brushless external rotor motor 21 is horizontally or vertically arranged in the shell 4 according to specific needs. The swing rod transmission assembly 3 is installed between the cutter assembly 1 and the motor assembly 2, and is used to convert the rotation force of the motor assembly 2 into the force to drive the moving blade 12 to carry out left-right reciprocating motion. The swing rod transmission assembly 3 comprises a positioning pin shaft 32 and a transmission swing rod 31 which is sheathed on the positioning pin shaft 32 and can rotate directionally along the positioning pin shaft 32. The positioning pin shaft 32 is vertically fixed on one side wall of the shell 4, one end of the transmission swing rod 31 corresponding to the motor assembly 2 forms a drive notch 311 for holding a spherical bearing 23, and one end of the transmission swing rod 31 corresponding to the cutter assembly 1 is used to drive the moving blade 12 to carry out left-right reciprocating motion. In this way, when rotating, the brushless external rotor motor 21 drives the eccentric output shaft 22 to rotate, so that the spherical bearing 23 can act on both side walls of the drive notch 311 of the transmission swing rod 31 to make the transmission swing rod 31 carry out left-right reciprocating motion around the positioning pin shaft 32, and drive the moving blade 12 to make left-right reciprocating motion to cooperate with the fixed blade 11 for shearing operation.

In the above scheme, preferably, the joint between the positioning pin shaft 32 and the transmission swing rod 31 is provided with a rotating bearing 33, the outer ring of the rotating bearing 33 is fixedly embedded on the transmission swing rod 31, and the inner ring of the rotating bearing 33 is fixedly sheathed on the positioning pin shaft 32, so that the transmission swing rod 31 can make the left-right reciprocating motion more flexible.

Compared with the prior art, the invention is simple and reasonable in structure, and adopts the brushless external rotor motor to replace the original conventional brush motor or the brushless internal rotor motor, so as to output the large torque with a smaller-volume motor, and realize direct drive, which greatly reduces the noise during operation. At the same time, the speed output of brushless external rotor motor is more stable, which can obtain better operation effect. Moreover, the spherical bearing is used as the fulcrum between the motor output end and the connection end of swing rod, which minimizes the friction loss of the transmission parts in the transmission process, and thus greatly improves the service life of the product.

The above disclosure is only the embodiment of the invention, but the invention is not limited to this, and any change that any technical personnel in the field can make shall fall into the protection scope of the invention.

## Claims

1. An electric hair clipper driven by a brushless external rotor motor, which is **characterized by** comprising a cutter assembly, a motor assembly and a swing rod transmission assembly;
the cutter assembly comprises a fixed blade and a moving blade moveably mounted on the fixed blade;
the motor assembly comprises a brushless external rotor motor, an eccentric output shaft driven by the brushless external rotor motor and a spherical bearing sheathed on the eccentric output shaft;
the swing rod transmission assembly is installed between the cutter assembly and the motor assembly, and comprises a positioning pin shaft and a transmission swing rod which is sheathed on the positioning pin shaft and rotates around the positioning pin shaft, the end of the transmission swing rod corresponding to the motor assembly forms a drive notch for holding the spherical bearing, and the end of the transmission swing rod corresponding to the cutter assembly is used to drive the moving blade.

2. The electric hair clipper driven by a brushless external rotor motor according to claim 1 is **characterized in that** a rotating bearing is arranged at the joint of the positioning pin shaft and the transmission swing rod, the external ring of the rotating bearing is fixedly embedded on the transmission bearing, and the internal ring is fixedly sheathed on the positioning pin shaft.

3. The electric hair clipper driven by a brushless external rotor motor according to claim 1 is **characterized by** also comprising a shell and a power supply assembly, the cutter assembly is installed at the front end of the shell, the motor assembly, the swing rod transmission assembly and the power supply assembly are all installed in the shell, and the power supply assembly provides power to the motor assembly, wherein, the fixed blade is fixedly installed at the front end of the shell, the brushless external rotor motor is fixedly installed in the shell, and the positioning pin shaft is vertically fixed on one side wall of the shell.

4. The electric hair clipper driven by a brushless external rotor motor according to claim 2 is **characterized by** also comprising a shell and a power supply assembly, the cutter assembly is installed at the front end of the shell, the motor assembly, the swing rod transmission assembly and the power supply assembly are all installed in the shell, and the power supply assembly provides power to the motor assembly, wherein, the fixed blade is fixedly installed at the front end of the shell, the brushless external rotor motor is fixedly installed in the shell, and the positioning pin shaft is vertically fixed on one side wall of the shell.

5. The electric hair clipper driven by a brushless external rotor motor according to claim 3 is **characterized in that** the brushless external rotor motor is horizontally or vertically arranged in the shell.
